# Europäisches Patentamt
## European Patent Office
## Office européen des brevets

(11) Publication number: **0 022 322**
**B1**

(12) **EUROPEAN PATENT SPECIFICATION**

(45) Date of publication of patent specification: **03.10.84**

(51) Int. Cl.³: **G 02 F 1/137, G 09 F 9/35**

(21) Application number: **80302070.0**

(22) Date of filing: **19.06.80**

(54) **Liquid crystal display device.**

(30) Priority: **22.06.79 JP 78082/79**

(43) Date of publication of application:
**14.01.81 Bulletin 81/02**

(45) Publication of the grant of the patent:
**03.10.84 Bulletin 84/40**

(84) Designated Contracting States:
**CH DE FR GB IT LI**

(56) References cited:
**DE-A-2 834 771
DE-A-2 900 969
GB-A-1 396 846
GB-A-1 470 475
US-A-3 966 304
US-A-3 967 883**

(73) Proprietor: **Stanley Electric Co., Ltd.
2-9-13, Nakameguro
Meguro-ku Tokyo (JP)**

(72) Inventor: **Wada, Masanobu
No. 8-22 Kamisugi 5-chome
Sendai-shi Miyagi-ken (JP)**
Inventor: **Uchida, Tatsua
Room No A8, Sato-Apt.House Nos. 21-5 Icho-machi
Sendai-shi Miyagi-ken (JP)**
Inventor: **Teshima, Toru
No. 4606-4 Motoishikawa-cho Midori-ku
Yokohama-shi Kanagawa-ken (JP)**

(74) Representative: **Harrison, David Christopher
et al
MEWBURN ELLIS & CO 2/3 Cursitor Street
London EC4A 1BQ (GB)**

Courier Press, Leamington Spa, England.

## Description

The present invention relates to a liquid crystal display device of a guest-host type using a mixture of a liquid crystal having a positive dielectric anisotropy and a pleochroic dye, and more particularly, it pertains to such a guest-host type liquid crystal display device which is capable of making a positive display, i.e., a display of a coloured image against a colourless background.

There has been proposed heretofore a large variety of liquid crystal display devices of the guest-host type which use a mixture of a liquid crystal material having a positive dielectric anisotropy serving as a host material and a pleochroic dye serving as a guest material, arranged in a display cell. Most of these prior art display devices however, are of a negative type; that is a colourless image appears against a coloured background upon application of voltage. This is accomplished by the use of the aforementioned positively anisotropic type of liquid crystal which has a large dielectric constant in the direction of the longitudinal axes of the liquid crystal molecules. In the past, when a positively anisotropic liquid crystal was used to construct a liquid crystal display device, then the longitudinal axes of the molecules of the liquid crystal were oriented, while no voltage was applied, in a direction parallel to the planes of the two parallel glass substrates, because otherwise the display device would be unable to effect display of an image in response to a voltage applied across the electrodes. The electrodes, of course, were designed to have a configuration corresponding to that of the pattern of the image to be displayed. Application of a voltage across the electrodes caused the molecules disposed therebetween to assume an orientation perpendicular to the plane of the substrate.

The longitudinal axes of the molecules of the dichroic dye are oriented in the same direction as those of the molecules of the liquid crystal, irrespective of whether or not a voltage is being applied across the electrodes. Thus, when no voltage was applied to such a device, the entire front of the display device was seen as a coloured display. The colour of this was the colour of the dichroic dye as a result of its absorption of light. On the other hand, when a voltage was applied, a colourless image appeared due to the disappearance of the light-absorption effect exerted by the dichroic dye, and this was contrasted with a coloured background at those portions other than those where the electrodes are.

Alternatively, a positive display, i.e., display of a coloured image on a colourless background, may be realized by using a liquid crystal having a negative dielectric anisotropy and by arranging the molecules of the liquid crystal disposed between electrodes in a direction perpendicular to the parallel planes of the substrates when no voltage is applied, so that application of a voltage will cause re-arrangement of the molecules to assume an orientation in a direction parallel to the planes of the substrates. However, there are problems in the characteristics of this cell in terms of the level of the voltage required for driving the molecules in the cell, re-orientation speed in response to the driving voltage applied and the service life of the device. For these reasons, this positive display cell has not yet been brought into widespread use.

DE—A—2834771 shows a liquid crystal display device which can make a "positive" display by using a liquid crystal having a positive dielectric anisotropy to serve as a host material and dichroic dye to serve as a guest material, wherein the electrodes and substrates are coextensive but wherein one electrode may have a small part of its surface covered by a film causing parallel orientation of the liquid crystal adjacent it.

The present invention on the other hand provides a display device having a mixture of a liquid crystal having a positive dielectric anisotropy to serve as a host material and a dichroic dye to serve as a guest material disposed between a pair of transparent substrates each having a transparent electrode. There are two films applied, one of which causes adjacent molecules of the liquid crystal to align themselves perpendicularly to the substrates, when no voltage is applied, but the other of which in the same condition causes a parallel alignment of such molecules. In the present invention one of the films extends over an edge of at least one of the electrodes onto the substrate, so that (since all the rest of the substrates and electrodes are covered by the other film) the image displayed when no voltage is applied need not be the same as the shape of the electrode(s). This allows great flexibility of design. The present device may be particularly valuable in the context of warning indicators which must function in the event of lack of power.

In the drawings,

Figures 1A to 1E show successive stages of a process for forming molecule-orienting films on a substrate for causing desired specific orientations of the molecules of the liquid crystal,

Figure 2A is a plan view of an embodiment of the display device according to the present invention, showing contours of electrodes and molecule-orienting films formed on the substrates,

Figure 2B is a diagrammatic vertical sectional view of the embodiment shown in Figure 2A, and

Figure 2C shows an example of the shape of an image to be displayed by the cell structure shown in Figures 2A and 2B.

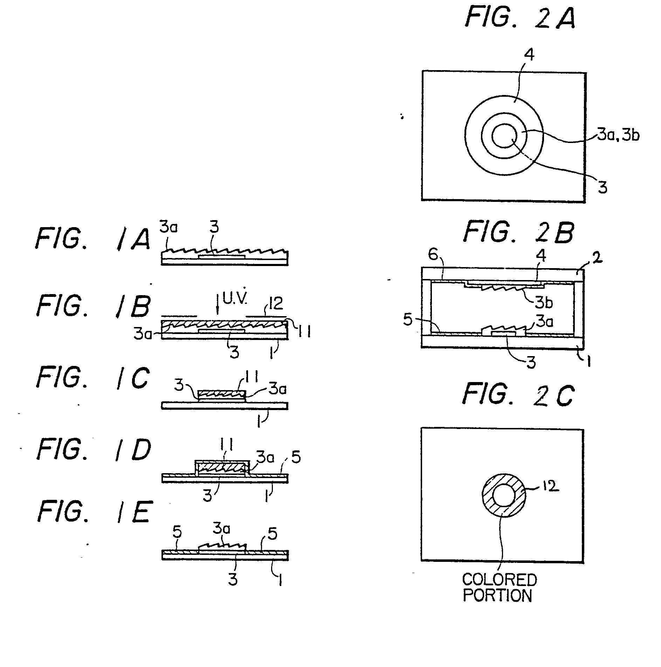

Referring to Figures 1A to 1E, there are shown a series of successive stages of the process for forming the aforementioned films for

2

causing the perpendicular and parallel orientations of the liquid crystal molecules relative to the planes of the substrates. In the first stage, Figure 1A, the surface of the transparent electrode 3 and that of the glass substrate 1 which is to be in contact with the liquid crystal are subjected to an oblique deposition thereon of a silicon oxide to form a film 3a which is intended to cause a parallel orientation of the molecules. Then, Figure 1B, a photoresist 11 is applied onto the top surface of film 3A and only the region of the photoresist just above the electrode 3 is exposed to light. This exposure to light can be carried out by covering, with masks 12, the entire region of the photoresist excepting the region located just above the electrode 3. Thereafter, Figure 1C, the masked portions of films 3a and 11 are etched away so as to leave only those portions of the films located just above the electrode 3. Then, Figure 1D, a film 5 of, for example, lecithin and which is intended to cause the perpendicular orientation of the molecules relative to the plane of the substrate is applied onto the surface so as to cover the residual photo-resist film 11 and the exposed surface areas of the substrate. Then, that portion of the film 5 covering the photoresist film 11 as well as this photoresist film 11 itself are removed. Figure 3E shows a cell component consisting of a glass substrate 1, an electrode 3, a film 5 provided on the substrate 1 and intended to cause the perpendicular orientation of the liquid crystal molecules located on said substrate 1, and a film 3a for causing the parallel orientation of the molecules located on said electrode 3, produced according to the process described above. Thus, the film intended for the perpendicular orientation of the molecules is formed only on that surface of the electrode 3 where the pattern is provided, while the film assigned for the parallel orientation is formed on the entire surface of that portion of the substrate located other than the region covered by the electrode.

Although this process has been described with respect to one of the components, i.e. the substrate 1, it should be understood that the same process steps may be applied to the other glass substrate 2. Compounds useful for forming the films for the perpendicular and parallel orientations of the liquid crystal molecules are well known by those skilled in the art, and do not need further description.

The patterns of the electrodes 3 and 4 and those of at least one of the films 3a and 3b according to the invention should not be coextensive and the electrodes 3 and 4 need not be identical in their size or shape. For example, in the embodiment shown in Figures 2A and 2B, electrodes 3 and 4 are respectively of different sizes. Oblique deposits, i.e., films 3a and 3b for causing parallel orientation are of identical configuration and are respectively larger and smaller than the electrodes 3 and 4. Film 5 for causing perpendicular orientation is formed on the whole of the inner surface of the substrate which is not covered by the film 3a. Film 6 for the causing of perpendicular orientation of liquid crystal molecules is formed so as to cover the whole of the surface of the substrate and of the electrode 4 located other than the region covered with the film 3b. In the absence of voltage, the molecules of the liquid crystal disposed between films 3a and 3b are oriented in a direction parallel to the plane of the substrate, so that a coloured image of the round outline of the coextensive films 3a and 3b appears. Upon application of voltage, however, those molecules of the liquid crystal located between the electrode 3 and the opposed portion of the electrode 4 are oriented in a direction perpendicular to the plane of the substrate. Therefore, only the central round portion of said coloured round image corresponding to the shape of the electrode 3 becomes colourless, resulting in the display of a ring-shaped image 12 as shown in Figure 2C. In this way, the many variations of image pattern become readily available by varying the relationship between the electrode and the film (such as 3a, 3b) formed on the electrode as to extent and/or as to shape. Moreover, by this means the problem of concealing that portion of the electrode which serves as a lead can be dealt with easily.

It will be apparent from the foregoing description that display devices according to the present invention can effect a positive coloured display when no voltage is applied, and therefore are able to give a much sharper display as compared with the conventional liquid crystal display device.

Especially, because the present invention employs a liquid crystal having a positive dielectric anisotropy to serve as host material the voltage for causing a transition of the orientation of the liquid crystal molecules may be lower, and such difficulties encountered in the prior art as a low speed of response and early degradation of quality can be avoided.

Moreover, as the display device of the present invention can exhibit a coloured pattern on a colourless screen, it can be used very effectively in apparatus such as watches, speedometers and level-gauges of vehicles which must effect a display of figures and in those which are to exhibit patterns. Recently, there have been requirements that indicators on automobiles must operate to provide a display even when the power supply is cut off by accident. The display device of the present invention is very appropriate to fill such a need.

**Claims**

1. A liquid crystal display device including a mixture of a liquid crystal having a positive dielectric aniostropy as host material and a dichroic dye as a guest material enclosed between parallel, transparent substrates (1, 2) each bearing an electrode (3, 4) at least a part of each electrode (3, 4) being covered with a first film (3a, 3b) causing orientation of the adjacent LC-molecules parallel to the surface when no voltage is applied, the parts of the first film opposing each other being coextensive, characterised that that any part of the substrates and electrodes not covered by the first film is covered by the second film (5, 6) causing adjacent liquid crystal molecules to be orientated perpendicular to its surface, and that the first film extends beyond at least an edge portion of at least one of the electrodes (3, 4) to cover part of the substrate.

2. A liquid crystal display device according to Claim 1, wherein said first film (3a) extends beyond the entire edge of the surface of one (3) of said electrode on one substrate (1).

3. A liquid crystal display device according to Claim 1 or Claim 2, wherein said first film (3b) on one substrate extends to only a part of the surface of the electrode (4) on this substrate and said first film (3a) on the other substrate extends beyond the entire edge of the surface of the other electrode 3.

**Revendications**

1. Dispositif d'affichage à cristaux liquides incluant un mélange de cristaux liquides ayant une anisotropie diélectrique positive comme matériau receveur et un colorant dichroïque comme matériau donneur inclus entre deux substrats (1 et 2) transparents, parallèles, chacun portant une électrode (3, 4), au moins une partie de chaque électrode (3, 4) étant recouverte avec un premier film (3a, 3b) provoquant l'orientation des molécules adjacentes de cristaux liquides parallèlement à la surface lorsque'aucune tension n'est appliquée, les parties du premier film opposées l'une à l'autre étant de même étendue, caractérisé en ce que chaque partie des substrats et des électrodes non recouvertes par le premier film est recouverte par un second film (5, 6) provoquant une orientation perpendiculaire à la surface des molécules de cristaux liquides adjacentes et en ce que le premier film s'étend au-delà d'au moins un bord d'au moins une des électrodes (3, 4) pour couvrir une partie du substrat.

2. Dispositif d'affichage à cristaux liquides selon la revendication 1, dans lequel ledit premier film (3a) s'étend au dela du bord entier de la surface de l'une (3) desdites électrodes sur un substrat (1).

3. Dispositif d'affichage à cristaux liquides selon la revendication 1 ou la revendication 2, dans lequel ledit premier film (3b) sur l'un des substrats s'etend sur seulement une partie de la surface de l'électrode (4) de ce substrat, ledit premier film (3a) sur l'autre substrat s'étendant au delà du bord entier de la surface de l'autre électrode (3).

**Patentansprüche**

1. Flüssigkristallanzeigevorrichtung mit einer Mischung aus einem eine positive dielektrische Anisotropie aufweisenden Flüssigkristall als Wirtsmaterial und einem dichroitischen Farbstoff als Gastmaterial, die zwischen parallelen, transparenten Substraten (1, 2) eingeschlossen ist, deren jedes eine Elektrode (3, 4) trägt, wobei mindestens ein Teil jeder Elektrode (3, 4) mit einem ersten Film (3a, 3b) bedeckt ist, der eine zu der Oberfläche parallele Ausrichtung der angrenzenden Flüssigkristallmoleküle bewirkt, wenn keine Spannung anliegt, und wobei die einander gegenüberliegenden Teile des ersten Filmes sich deckungsgleich erstrecken, dadurch gekennzeichnet, daß jeder der von dem ersten Film nicht bedeckten Teile der Substrate und Elektroden mit einem zweiten Film (5, 6) bedeckt ist, der eine zu seiner Oberfläche senkrechte Ausrichtung der angrenzenden Flüssigkristallmoleküle hervorruft, und daß sich der erste Film über mindestens einen Randbereich mindestens einer der Elektroden (3, 4) hinauserstreckt, um einen Teil des Substrats zu bedecken.

2. Flüssigkristallanzeigevorrichtung nach Anspruch 1, bei der sich der erste Film (3a) über den gesamten Rand der Oberfläche von einer (3) der Elektroden auf dem einen Substrat (1) hinauserstreckt.

3. Flüssigkristallanzeigevorrichtung nach Anspruch 1, oder Anspruch 2, bei der sich der erste Film (3b) auf dem einen Substrat nur über einen Teil der Oberfläche der Elektrode (4) auf diesem Substrat erstreckt und sich der erste Film (3a) auf dem anderen Substrat über den gesamten Rand der Oberfläche der anderen Elektrode (3) hinauserstreckt.

# FIG. 2 A

# FIG. 1 A

# FIG. 1 B

U.V.

# FIG. 1 C

# FIG. 1 D

# FIG. 1 E

# FIG. 2 B

# FIG. 2 C

COLORED PORTION